# FASCICULE DE BREVET EUROPEEN

(11) **EP 3 164 548 B1**
(45) Date de publication et mention de la délivrance du brevet: **29.04.2020**
(21) Numéro de dépôt: 15732587.9
(22) Date de dépôt: 23.06.2015
(51) Int. Cl.: E03B 7/10, F16K 31/46, E03B 7/12

(54) **DISPOSITIF DE DISTRIBUTION D'EAU ANTI-GEL**
VORRICHTUNG ZUR AUSGABE VON FROSTSCHUTZWASSER
DEVICE FOR DISPENSING ANTIFREEZE WATER

(30) Priorité: 01.07.2014 FR 1456287
(43) Date de publication de la demande: 10.05.2017
(73) Titulaire: Societe Nouvelle STN 3 R, 76510 Saint-Nicolas-d'Aliermont (FR)
(72) Inventeur: PEYRELONGUE, Vincent, F-59700 Marcq en Baroeul (FR)
(74) Mandataire: Hirsch & Associés
(86) Numéro de dépôt international: PCT/EP2015/064055
(87) Numéro de publication internationale: WO 2016/001007

(56) Documents cités:
- FR-A- 1 213 986
- GB-A- 2 235 490
- US-A1- 2005 161 087

## Description

La présente invention concerne un dispositif de distribution d'eau, destiné notamment à équiper des points d'eau installés dans des zones susceptibles de subir des températures négatives, telles que des aires de repos sur autoroutes.

De tels points d'eau peuvent subir, notamment l'hiver, des températures très basses auxquelles l'eau contenu dans les conduits de distribution d'eau est susceptible de geler, donc d'entraîner des dommages aux conduits par exemple par éclatement de ceux-ci.

Pour éviter cela, on peut tout simplement fermer l'alimentation en eau de ces dispositifs, ce qui les rend cependant inutilisables pendant toute la période concernée.

On peut également prévoir d'installer ces points d'eau dans des bâtiments suffisamment chauffés et isolés thermiquement, ce qui entraîne cependant un coût important en termes d'installation de ces bâtiments et pour maintenir ces bâtiment à une température suffisante pendant toute la période concernée, alors même que l'utilisation de ces points d'eau n'est pas continue pendant toute cette période.

On connaît du document FR 2 959 255 un dispositif de distribution d'eau comprenant un conduit de distribution d'eau accessible à un utilisateur disposé en partie à l'extérieur, au-dessus du sol, donc non protégé du froid, et un système de vannes multivoies et un conduit d'alimentation en eau disposés dans le sol, protégés du froid. Un autre système de déshydratation des canalisations d'eau comprenant une vanne à trois voies est décrit dans le document GB 2235490, qui contient une régulation automatique dépendante de la température.

Le système de vannes multivoies est commandé par un système d'ouverture/fermeture déporté à l'extérieur.

Le système de vannes multivoies comprend notamment une voie de vidange distincte, dont l'ouverture est également commandée par le système d'ouverture fermeture déporté, qui permet de vidanger l'eau résiduelle contenue dans la portion verticale du conduit de distribution d'eau.

Ainsi, en ouvrant la voie de vidange du système de vannes multivoies par une action spécifique sur le système de commande déporté, et en fermant l'arrivée d'eau par une autre action spécifique sur le système de commande déporté, on obtient la vidange par l'intermédiaire du conduit de vidange spécifique.

Un des inconvénients de ce système est qu'il fonctionne uniquement en position sensiblement verticale, ou suffisamment inclinée pour que la colonne d'eau résiduelle verticale ou inclinée puisse automatiquement s'évacuer par le conduit de vidange lorsque la commande déporté est actionné tel qu'expliqué plus haut.

Il nécessite donc d'être monté dans le sol, ou au-dessus d'un ensemble isolé thermiquement.

Dans le premier cas, le système de vannes multivoies, de vidange et d'arrivée d'eau doit donc être installé dans le sol, ce qui nécessite des travaux importants notamment pour amener l'eau de façon sous-terraine jusqu'au point d'eau.

Dans le second cas, si l'ensemble isolé thermiquement se trouve à distance de la source en eau, l'eau doit également être amenée de façon sous-terraine. Sinon, l'installation par le dessus de l'ensemble isolé nécessite soit la construction d'un tel ensemble à faible hauteur contre le bâtiment technique dans lequel se trouve la source en eau, soit l'installation directement sur le dessus de ce bâtiment technique don à une hauteur trop importante pour rendre le dispositif utilisable.

Un autre inconvénient de ce dispositif est qu'il nécessite une action spécifique sur le système de commande déporté pour mettre le système de vannes multivoies en position de vidange.

Par ailleurs, le système de vannes multivoies et complexe. En effet, il est constitué d'une première vanne d'alimentation en eau à trois voies qui communique par une de ces voies avec une seconde vanne de vidange à deux voies, chacune de ces deux vannes étant commandées par un système de double commande déporté reposant sur deux tubes concentriques faisant office d'axes d'entraînement de deux pignons engrenés qui entraînent à leur tour des éléments rotatifs de fermeture/ouverture des voies des deux vannes.

Le système de vannes multivoies complexe décrit ci-dessus nécessite donc une commande complexe. L'utilisation, la fabrication et la maintenance de l'ensemble est donc plus coûteuse.

On connaît d'autres dispositifs, tel que celui décrit dans le document EP 1 347 104 par exemple, qui fonctionnent en position horizontale.

Ainsi, dans ce document, le dipositif comprend un robinet et une commande déportée pour commander une vanne située en amont du robinet, le conduit entre la vanne et le robinet étant horizontal.

A la fermeture de l'arrivée d'eau par la commande déportée, le conduit horizontal se vidange. Cette vidange est obtenu par pression d'air sur le résidu d'eau contenu dans le conduit à la fermeture, par un mécanisme d'arbre tubulaire disposé à l'intérieur du conduit qui communique par ailleurs avec l'extérieur via des petits conduits à l'extrémité avale.

Par action sur l'élément de commande, on déplace l'arbre tubulaire de sorte d'ouvrir la connexion entre l'arrivée d'eau et le conduit horizontal, la pression de l'eau agissant sur la valve pour fermer l'extrémité amont de l'arbre tubulaire. Parallèlement, l'air extérieur rentre dans cet arbre tubulaire via les petits conduits en aval.

Lorsque l'on agit inversement sur l'élément de commande, on déplace l'arbre tubulaire de sorte de fermer la connexion entre l'arrivée d'eau et le conduit horizontal. La valve ne subissant plus la pression de l'eau s'ouvre et fait communiquer l'intérieur de l'arbre tubulaire remplis d'air avec l'intérieur du conduit horizontal encore rempli d'eau qui pousse l'eau résiduelle de ce conduit horizontal vers le robinet de sortie.

Outre le fait qu'il s'agit ici encore d'un mécanisme relativement complexe, donc coûteux à fabriquer, à mettre en place, et à maintenir, un tel dispositif ne peut pas être monté à travers une paroi d'une épaisseur importante, sauf à allonger tous les éléments du mécanisme horizontal décrit ci-dessus, donc à rendre le dispositif encore plus couteux à fabriquer et à maintenir. Or, dans les bâtiments isolés thermiquement, les parois d'isolation présentent une certaine épaisseur qui peut être grande.

Un des buts de l'invention est donc de résoudre notamment les problèmes précités. Ainsi, l'invention a notamment pour objectif de proposer un dispositif de distribution d'eau antigel simple, peu coûteux et facile à installer sur des bâtiments techniques existants.

Ainsi, l'invention a pour objet un dispositif de distribution d'eau comprenant un conduit de distribution d'eau dont une partie externe est apte à être disposée à l'extérieur d'un ensemble isolé thermiquement et à délivrer de l'eau par l'intermédiaire d'un orifice de sortie, et dont une partie interne est reliée à une première voie d'un moyen de type vanne à au moins trois voies apte à être disposé à l'intérieur de l'ensemble isolé.

Le moyen de type vanne est commandé par un moyen de commande actionnable depuis l'extérieur de l'ensemble isolé, et comprend une deuxième voie apte à être reliée à une source d'eau sous pression et un élément de fermeture mobile par l'intermédiaire du moyen de commande entre une position d'ouverture dans laquelle la première voie communique uniquement avec la deuxième voie pour alimenter en eau l'orifice de sortie, et une position de fermeture dans laquelle la première voie ne communique pas avec la deuxième voie.

Le conduit de distribution est apte à être disposé à travers une paroi non horizontale, de préférence sensiblement verticale, assurant l'isolation thermique de l'ensemble isolé.

Dans la position de fermeture, la première voie communique uniquement et systématiquement avec une troisième voie du moyen de type vanne,
De la sorte, on obtient, dans la position de fermeture de l'élément de fermeture, la vidange automatique, par gravité et appel d'air par la troisième voie 9, de tout ou partie d'un contenu résiduel d'eau dans au moins la partie non isolée thermiquement du conduit de distribution, par l'orifice de sortie.

Suivant certains modes de réalisation, le dispositif comprend en outre une ou plusieurs des caractéristiques suivantes, prise(s) isolément ou suivant toutes les combinaisons techniquement possibles :
- la troisième voie est pourvue d'un filtre apte à laisser passer l'air et à filtrer les éléments de taille supérieure à une taille déterminée ;
- le conduit de distribution est apte à être disposé à travers la paroi non horizontale de sorte que l'entrée d'air par la troisième voie se trouve à un niveau supérieur au niveau auquel est situé le dernier point en amont de l'orifice de sortie non islolé thermiquement ;
- le conduit de distribution est apte à être disposé à travers la paroi non horizontale de sorte que l'orifice de sortie soit situé à un niveau inférieur au niveau auquel est situé le dernier point en amont de l'orifice de sortie non isolé thermiquement, et de sorte qu'il n'existe pas de pente positive le long du conduit de distribution entre l'orifice de sortie et le dernier point ;
- le conduit de distribution est apte à être disposé à travers la paroi non horizontale en sorte de permettre, dans la position de fermeture de l'élément de fermeture, la vidange automatique par gravité d'un contenu résiduel d'eau dans tout le conduit de distribution par l'orifice de sortie ;
- le conduit de distribution est apte à être disposé à travers la paroi non horizontale en sorte qu'au moins sa portion traversant cette paroi non horizontale soit sensiblement horizontale ;
- le dispositif comprend un support de fixation, tel qu'une patte de fixation en équerre, et le moyen de type vanne est apte à être fixé à l'intérieur de l'ensemble isolé par l'intermédiaire du support de fixation ;
- le moyen de type vanne est apte à être fixé à la face interne de la paroi non horizontale par l'intermédiaire du support de fixation ;
- le moyen de type vanne est apte à être fixé à l'intérieur de l'ensemble isolé par l'intermédiaire du support de fixation en sorte que l'axe central de la première voie soit sensiblement vertical ;
- le moyen de type vanne ne comprend pas d'autres voies que les première, deuxième et troisième voies ;
- le moyen de commande comprend une tige dont une partie externe est disposée à l'extérieur de l'ensemble isolé et dont une partie interne est reliée à l'élément de fermeture, de sorte qu'une première action sur la tige par l'extérieur de l'ensemble isolé entraîne le mouvement de l'élément de fermeture de sa position de fermeture à sa position d'ouverture, et qu'une action inverse de la première action sur la tige par l'extérieur de l'ensemble isolé entraîne le mouvement de l'élément de fermeture de sa position de d'ouverture à sa position de fermeture ;
- la tige est pourvue d'un élément de rappel de sorte qu'un arrêt de la première action sur la tige entraîne automatiquement l'action inverse sur cette tige et le retour de l'élément de fermeture à sa position de fermeture.

Ainsi, le dispositif de l'invention permet d'obtenir la vidange de l'eau résiduelle située au moins dans la partie du conduit de distribution d'eau non isolée thermiquement, directement par le conduit de distribution d'eau, à la fermeture de l'arrivée d'eau, sans action de vidange spécifique de la part de l'utilisateur, et sans utilisation d'un système de vannes multivoies complexe.

Le dispositif peut par exemple être installé à travers une paroi verticale d'un bâtiment technique isolé dans lequel se trouve l'alimentation en eau.

En outre, le dispositif ne nécessite pas d'installation sous-terraine spécifique.

Les caractéristiques et avantages de l'invention apparaitront à la lecture de la description qui va suivre, donnée uniquement à titre d'exemple, et non limitative, en référence aux figures annexées suivantes :
- figure 1 : représentation schématique d'un exemple de dispositif selon l'invention monté à travers et de part et d'autre d'une paroi verticale ;
- figure 2 : représentation schématique de l'exemple de la figure 1, avant montage à travers une paroi verticale ;
- figure 3 : représentation schématique détaillée d'un exemple de moyen de type vanne à deux voies du dispositif des figures 1 et 2.

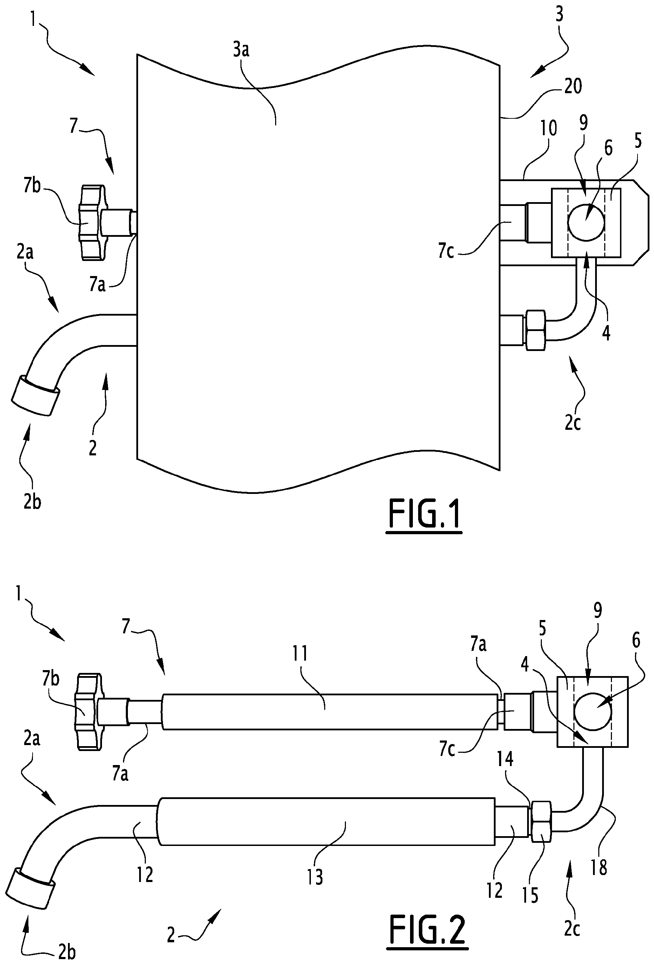

L'exemple de dispositif 1 de distribution d'eau est représenté schématiquement d'une part monté à travers une paroi 3a qui n'est pas horizontale, et qui est de préférence verticale, d'un ensemble 3 isolé thermiquement, sur la figure 1, et d'autre part avant montage à travers la paroi 3a sur la figure 2.

La paroi 3a assure l'isolation thermique de l'ensemble 3.

Le dispositif 1 comprend un conduit de distribution d'eau 2 relié à une première voie 4 d'un moyen de type vanne 5 qui comporte au moins trois voies 4, 6 et 9.

Dans la suite de la description, le moyen de type vanne 5 sera appelé vanne 5 pour simplifier.

La deuxième voie 6 de la vanne 5 est destinée à être relié à une source d'alimentation en eau sous pression.

La vanne 5 est commandée par un moyen de commande 7, en sorte de permettre alternativement la mise en communication des première et deuxième voies 4, 6 et l'interruption de cette communication, en sorte donc de permettre alternativement la distribution d'eau par l'intermédiaire de l'orifice de sortie 2b du conduit de distribution 2, et l'arrêt de cette distribution d'eau.

Dans cet exemple, le conduit de distribution 2 présente une portion centrale 12 essentiellement rectiligne qui, montée à travers la paroi 3a, se trouve en position sensiblement horizontale.

On peut prévoir un fourreau de protection 13 pour protéger la portion du conduit de distribution 2 traversant la paroi 3a.

De part et d'autre de la portion du conduit de distribution 2 traversant la paroi 3a, ce conduit 2 présente une partie externe 2a, dont l'extrémité est pourvue de l'orifice de sortie 2b, et une partie interne 2c dont l'extrémité est raccordée à la première voie 4 de la vanne 5.

Dans cet exemple, la partie interne 2c comprend un coude 18 formant l'extrémité de cette partie interne 2c, donc étant raccordé d'une part à la première voie 4 de la vanne 5 et d'autre part, via un raccord fileté 15 serré par un écrou 14, à la portion centrale rectiligne 12 du conduit de distribution 2.

Le moyen de commande 7 est disposé également à travers la paroi 3a, avec une partie externe 7b, comprenant par exemple un bouton rotatif 7b, accessible de l'extérieur de l'ensemble 3, et une partie interne 7c reliée à la vanne 5 à l'intérieur de l'ensemble isolé 3.

Le bouton 7b est solidaire d'une tige de commande 7a qui traverse la paroi 3a pour se connecter à la vanne 5 à travers un manchon 7c.

On peut prévoir un fourreau de protection 11 pour protéger la tige 7a traversant la paroi 3a.

Par une première action sur le moyen de commande 7, la première voie 4 est mise en communication avec la seule deuxième voie 6, ce qui permet la distribution d'eau par le conduit de distribution 2 jusqu'à l'orifice de sortie 2b lorsque la deuxième voie 6 est reliée à une source d'eau sous pression.

Par une action inverse sur le moyen de commande 7, qui peut être obtenue automatiquement lorsque la première action cesse, par exemple via des moyens de rappel, la communication entre les première et deuxième voie 4, 6 est interrompue, interrompant du même coup la distribution d'eau.

Le conduit de distribution 2 est disposé à travers la paroi 3a en sorte de permettre, lorsque la communication entre les première et deuxième voies 4, 6 cesse, la vidange automatique par gravité et appel d'air par la troisième voie 9 de la vanne 5, d'au moins une partie d'un contenu résiduel d'eau dans au moins la partie non isolée thermiquement 2a du conduit de distribution 2, par l'orifice de sortie 2b.

Dans l'exemple représenté aux figures 1 et 2, le contenu résiduel d'eau dans tout le conduit de distribution 2 est vidangé automatiquement par l'orifice de sortie 2b, y compris l'eau résiduelle dans la partie centrale rectiligne 12 et dans le coude 18.

Le conduit de distribution 2 peut présenter une forme d'ensemble différente de celle représentée aux figures 1 et 2.

Il est disposé à travers la paroi 3a de sorte que l'orifice de sortie 2b soit situé à un niveau inférieur au niveau auquel est situé le dernier point en amont de l'orifice de sortie 2b non isolé thermiquement, et de sorte qu'il n'existe pas de pente positive le long du conduit de distribution 2 entre l'orifice de sortie 2b et ce dernier point.

Il est également disposé à travers la paroi 3a de sorte que l'entrée d'air par la troisième voie 9 se trouve à un niveau supérieur au niveau auquel est situé le dernier point en amont de l'orifice de sortie 2b non isolé thermiquement.

Dans l'exemple représenté à la figure 1, on peut considérer que ce dernier point en amont de l'orifice de sortie 2b non isolé thermiquement et le dernier point en amont de cet orifice de sortie 2b avant que le conduit pénètre dans la paroi 3a, si l'on considère que le conduit de distribution 2 est suffisamment isolé thermiquement dès son entrée dans la paroi 3a.

Si ce n'est pas le cas, en fonction du pouvoir d'isolation thermique de la paroi 3a, on peut considérer que ce dernier point en amont de l'orifice de sortie 2b non isolé thermiquement est situé sur la portion centrale 12 du conduit de distribution 3a, entre la face externe et la face interne 20 de cette paroi 3a, voire juste au niveau de la face interne 20 de cette paroi 3a.

Un support de fixation 10 est prévu, par exemple du type patte de fixation en équerre 10, pour fixer la vanne 5 à l'intérieur de l'ensemble isolé thermiquement 3.

Dans l'exemple de la figure 1, le support de fixation 10 permet de fixer la vanne 5 à la face interne 20 de la paroi 3a.

L'axe central de la première voie 4, par laquelle le conduit de distribution 2 est alimenté en eau, est sensiblement vertical dans cet exemple.

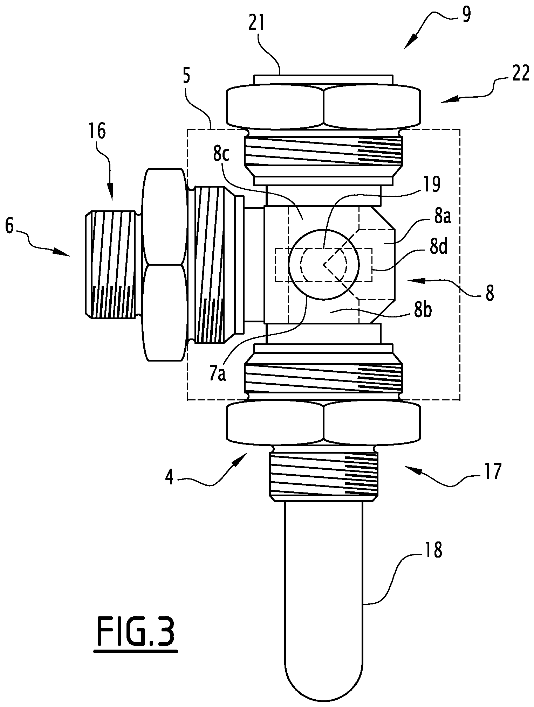

La figure 3 représente schématiquement la vanne 5 de l'exemple des figures 1 et 2, avec plus de détails pour permettre d'en comprendre le fonctionnement. Sur cette figure 3, la vanne est vue face à la face interne 20 de la paroi 3a.

La vanne 5 ne comprend pas d'autres voies que les première, deuxième et troisième voies 4, 6, et 9.

Comme on peut le voir plus précisément sur la figure 3, la vanne 5 comprend un corps de vanne 5 à l'intérieur duquel est monté un élément de fermeture 8.

La première voie 4 est reliée au coude 18 du conduit de distribution 2 par un raccord fileté 17.

La deuxième voie 6 est apte à être reliée à une source d'alimentation en eau sous pression par un raccord fileté 16.

La troisième voie 9 présente également, dans l'exemple de la figure 3, un raccord fileté 22, mais qui n'est connecté à aucun élément puisque la troisième voie 9 sert de voie d'entrée d'air.

On prévoit cependant d'équiper la troisième voie 9 d'un filtre 21 permettant de laisser entrer l'air mais apte à filtrer des éléments de taille supérieure à une taille déterminée. Ceci est notamment important quand le dispositif est installé en un lieu ou deux nombreuses particules de poussières, ou des insectes, pourraient facilement s'introduire par la troisième voie 9 et poser des problèmes sanitaires.

L'élément de fermeture 8 peut prendre deux positions. Dans une premier position, ou position d'ouverture, les première et deuxième voies 4 et 6 communiquent. Précisément, dans cette position, la première voie 4 communique uniquement avec la deuxième voie 6. Dans une deuxième position, ou position de fermeture, correspondant à la position représentée à la figure 3, la communication entre les première et deuxième voies 4 et 6 est interrompue. Dans cette deuxième position, la première voie 4 communique uniquement et systématiquement avec la troisième voie 9.

Pour ce faire, dans cet exemple, l'élément de fermeture 8 est percé de troies ouvertures 8a, 8b et 8c. Les deux ouvertures 8c et 8b sont coaxiales selon, donc en vis-à-vis, et l'ouverture 8a communique avec l'une et l'autre des deux ouvertures 8b et 8c, selon deux axes formant un certain angle.

Dans la position de fermeture, telle que représentée à la figure 3, l'axe des ouvertures 8b et 8c coîncide avec l'axe central des première et troisième voies 4 et 9, et l'axe de l'ouverture 8a coîncide avec l'axe central de la deuxième voie 6.

L'élément de fermeture 8 est pourvu d'une encoche 8d orientée de façon à faire face à l'extrémité interne 19 de la tige 7a. Tous ces éléments, comme tous les éléments situés à l'intérieur du corps de vanne 5, sont représentés en transparence sur la figure 3.

Lorsque l'on fait tourner le bouton 7b du moyen de commande 7 dans le sens approprié, on entraîne la tige 7a en rotation, ce qui entraîne l'élément de fermeture 8 en rotation par l'emprise de l'extrémité 19 de la tige 7a dans l'encoche 8d de l'élément de fermeture 8.

Ainsi, on peut faire passer l'élément de fermeture 8 de la position de fermeture, telle que représentée à la figure 3, dans laquelle seules la première voie 4communique avec l'une 8b des ouvertures 8a, 8b, 8c de l'élément de fermeture 8, et la troisième voie 9 communique avec une autre 8c de ces ouvertures 8a, 8b, 8c, et donc position dans laquelle les première et deuxième voies 4, 6 ne communiquent pas mais la première voie 4 communique uniquement et systématiquement avec la troisième voie 9, à la position d'ouverture, dans laquelle les première et deuxième voies 4, 6 chacune communiquent avec l'une 8b, 8a des ouvertures 8a, 8b, 8c de l'élément de fermeture 8, l'ouverture 8c restante ne communiquant avec aucune des trois voies 4, 6, 9, la troisième voie 9 ne communiquant avec aucune des deux autres voies 4, 6, et donc position dans laquelle la première voie 4 communique uniquement avec la deuxième voies 6.

Le passage inverse, de la position d'ouverture à la position de fermeture de l'élément de fermeture 8, peut être obtenu par l'action inverse sur le moyen de commande 7, en faisant tourner la tige 7a via bouton 7b dans le sens inverse.

Le retour à la position de fermeture de l'élément de fermeture 8 peut aussi être obtenu automatiquement par des moyens de rappel, tel qu'un ressort dont une extrémité est fixée à un point fixe, tel qu'un point approprié du support de fixation 10 ou de la paroi 3a, et dont l'autre extrémité est fixée directement sur la tige 7a indirectement via le manchon 7c.

La présente description est donnée à titre d'exemple et n'est pas limitative de l'invention.

En particulier le mécanisme de fermeture/ouverture des voies du moyen de type vanne 5, par un élément de fermeture 8 rotatif n'est qu'un exemple de mécanisme permettant la communication et l'interruption de la communication entre les deux voies 4, 6 de la vanne 5. D'autres mécanismes, rotatifs ou non, par le biais d'éléments de type clapet ou double-clapet peuvent être utilisés, commandés par un moyen de commande 7 par rotation ou par translation.

Egalement, la forme exacte du conduit de distribution 2 est donnée à titre d'exemple. D'autres formes peuvent être utilisées que celle représentée aux figures 1 et 2, pour autant qu'elles n'empêchent pas la vidange de l'eau résiduelle contenue dans au moins la partie non isolée thermiquement du conduit de distribution.

## Revendications

1. Dispositif (1) de distribution d'eau comprenant un conduit de distribution (2) d'eau dont une partie externe (2a) est apte à être disposée à l'extérieur d'un ensemble isolé (3) thermiquement et à délivrer de l'eau par l'intermédiaire d'un orifice de sortie (2b), et dont une partie interne (2c) est reliée à une première voie (4) d'un moyen de type vanne (5) à au moins trois voies (4, 6, 9) apte à être disposé à l'intérieur de l'ensemble isolé (3) et commandé par un moyen de commande (7) actionnable depuis l'extérieur de l'ensemble isolé (3), le moyen de type vanne (5) comprenant une deuxième voie (6) apte à être reliée à une source d'eau sous pression et un élément de fermeture (8) mobile par l'intermédiaire du moyen de commande (7) entre une position d'ouverture dans laquelle la première voie (4) communique uniquement avec la deuxième voie (6) pour alimenter en eau l'orifice de sortie (2b), et une position de fermeture dans laquelle la première voie (4) ne communique pas avec la deuxième voie (6),
**caractérisé en ce que** le conduit de distribution (2) est apte à être disposé à travers une paroi non horizontale (3a), de préférence sensiblement verticale, assurant l'isolation thermique de l'ensemble isolé (3), et **en ce que**, dans la position de fermeture, la première voie communique uniquement et systématiquement avec une troisième voie (9) du moyen de type vanne (5), en sorte de permettre, dans la position de fermeture de l'élément de fermeture (8), la vidange automatique, par gravité et appel d'air par la troisième voie (9), de tout ou partie d'un contenu résiduel d'eau dans au moins la partie non isolée thermiquement (2a) du conduit de distribution (2), par l'orifice de sortie (2b).

2. Dispositif selon la revendication 1, **caractérisé en ce que** la troisième voie (9) est pourvue d'un filtre (21) apte à laisser passer l'air et à filtrer les éléments de taille supérieure à une taille déterminée.

3. Dispositif selon l'une quelconque des revendications 1 et 2, **caractérisé en ce que** le conduit de distribution (2) est apte à être disposé à travers la paroi non horizontale (3a) de sorte que l'entrée d'air par la troisième voie (9) se trouve à un niveau supérieur au niveau auquel est situé le dernier point en amont de l'orifice de sortie (2b) non islolé thermiquement.

4. Dispositif selon l'une quelconque des revendications 1 à 3, **caractérisé en ce que** le conduit de distribution (2) est apte à être disposé à travers la paroi non horizontale (3a) de sorte que l'orifice de sortie (2b) soit situé à un niveau inférieur au niveau auquel est situé le dernier point en amont de l'orifice de sortie (2b) non isolé thermiquement, et de sorte qu'il n'existe pas de pente positive le long du conduit de distribution (2) entre l'orifice de sortie (2b) et le dit dernier point.

5. Dispositif selon l'une quelconque des revendications 1 à 4, **caractérisé en ce que** le conduit de distribution (2) est apte à être disposé à travers la paroi non horizontale (3a) en sorte de permettre, dans la position de fermeture de l'élément de fermeture (8), la vidange automatique par gravité d'un contenu résiduel d'eau dans tout le conduit de distribution (2) par l'orifice de sortie (2b).

6. Dispositif selon l'une quelconque des revendications 1 à 5, **caractérisé en ce que** le conduit de distribution (2) est apte à être disposé à travers la paroi non horizontale (3a) en sorte qu'au moins sa portion traversant ladite paroi non horizontale (3a) soit sensiblement horizontale.

7. Dispositif selon l'une quelconque des revendications 1 à 6, **caractérisé en ce qu'**il comprend un support de fixation (10), tel qu'une patte de fixation en équerre (10), et **en ce que** le moyen de type vanne (5) est apte à être fixé à la face interne (20) de la paroi non horizontale (3a) par l'intermédiaire du support de fixation (10).

8. Dispositif selon la revendication 7, **caractérisé en ce que** le moyen de type vanne (5) est apte à être fixé à l'intérieur de l'ensemble isolé (3) par l'intermédiaire du support de fixation (10) en sorte que l'axe central de la première voie (4) soit sensiblement vertical.

9. Dispositif selon l'une quelconque des revendications 1 à 8, **caractérisé en ce que** le moyen de type vanne (5) ne comprend pas d'autres voies que les première (4), deuxième (6) et troisième (9) voies.

10. Dispositif selon l'une quelconque des revendications 1 à 9, **caractérisé en ce que** le moyen de commande (7) comprend une tige (7a) dont une partie externe est apte à être disposée à l'extérieur de l'ensemble isolé (3) et dont une partie interne est reliée à l'élément de fermeture (8), de sorte qu'une première action sur la tige (7a) par l'extérieur de l'ensemble isolé (3) entraîne le mouvement de l'élément de fermeture (8) de sa position de fermeture à sa position d'ouverture, et qu'une action inverse de la première action sur la tige (7a) par l'extérieur de l'ensemble isolé (3) entraîne le mouvement de l'élément de fermeture (8) de sa position de d'ouverture à sa position de fermeture.

11. Dispositif selon la revendication 10, **caractérisé en ce que** la tige (7a) est pourvue d'un élément de rappel de sorte qu'un arrêt de la première action sur la tige (7a) entraîne automatiquement l'action inverse sur cette tige (7a) et le retour de l'élément de fermeture (8) à sa position de fermeture.

## Patentansprüche

1. Vorrichtung (1) zur Ausgabe von Wasser, umfassend eine Wasserausgabeleitung (2), von der ein äußerer Teil (2a) dafür geeignet ist, um an der Außenseite einer thermisch isolierten Einheit (3) angeordnet zu sein und um Wasser durch eine Ausgangsöffnung (2b) abzugeben, und von der ein innerer Teil (2c) mit einem ersten Weg (4) eines Mittels vom Typ eines Ventils (5) mit mindestens drei Wegen (4, 6, 9) verbunden ist, welches dafür geeignet ist, um im Inneren der isolierten Einheit (3) angeordnet zu sein, und von einem Steuermittel (7) gesteuert wird, das von der Außenseite der isolierten Einheit (3) betätigbar ist, wobei das Mittel vom Typ eines Ventils (5) einen zweiten Weg (6) umfasst, der dafür geeignet ist, um mit einer Quelle von Wasser unter Druck und einem Schließelement (8) verbunden zu sein, das durch das Steuermittel (7) zwischen einer Öffnungsposition, in welcher der erste Weg (4) nur mit dem zweiten Weg (6) kommuniziert, um die Ausgangsöffnung (2b) mit Wasser zu versorgen, und einer Schließposition, in welcher der erste Weg (4) nicht mit dem zweiten Weg (6) kommuniziert, bewegbar ist,
**dadurch gekennzeichnet, dass** die Ausgabeleitung (2) dafür geeignet ist, quer durch eine nicht horizontale, vorzugsweise im Wesentlichen vertikale Wand (3a) angeordnet zu sein, welche die thermische Isolierung der isolierten Einheit (3) sicherstellt, und dass, in der Schließposition, der erste Weg nur und systematisch mit einem dritten Weg (9) des Mittels vom Typ eines Ventils (5) kommuniziert, um, in der Schließposition des Schließelements (8), die automatische Entleerung, durch Schwerkraft und den Sogeffekt durch den dritten Weg (9), des gesamten oder eines Teils des verbleibenden Inhalts an Wasser in mindestens dem nicht thermisch isolierten Teil (2a) der Ausgabeleitung (2) durch die Ausgangsöffnung (2b) zu gestatten.

2. Vorrichtung nach Anspruch 1, **dadurch gekennzeichnet, dass** der dritte Weg (9) mit einem Filter (21) versehen ist, der dafür geeignet ist, um die Luft hindurchzulassen und um die Elemente mit einer größeren Größe als einer bestimmten Größe zu filtern.

3. Vorrichtung nach einem der Ansprüche 1 und 2, **dadurch gekennzeichnet, dass** die Ausgabeleitung (2) dafür geeignet ist, quer durch die nicht horizontale Wand (3a) derart angeordnet zu sein, dass das Eindringen von Luft durch den dritten Weg (9) auf einer Höhe erfolgt, die größer ist als die Höhe, auf welcher der letzte nicht thermisch isolierte Punkt stromaufwärts von der Ausgangsöffnung (2b) angeordnet ist.

4. Vorrichtung nach einem der Ansprüche 1 bis 3, **dadurch gekennzeichnet, dass** die Ausgabeleitung (2) dafür geeignet ist, um quer durch die nicht horizontale Wand (3a) derart angeordnet zu sein, dass die Ausgangsöffnung (2b) auf einer Höhe angeordnet ist, die kleiner ist als die Höhe, auf welcher der letzte nicht thermisch isolierte Punkt stromaufwärts von der Ausgangsöffnung (2b) angeordnet ist, und dass kein positives Gefälle entlang der Ausgabeleitung (2) zwischen der Ausgangsöffnung (2b) und dem letzten Punkt besteht.

5. Vorrichtung nach einem der Ansprüche 1 bis 4, **dadurch gekennzeichnet, dass** die Ausgabeleitung (2) dafür geeignet ist, um quer durch die nicht horizontale Wand (3a) derart angeordnet zu sein, dass, in der Schließposition des Schließelements (8), die automatische Entleerung durch Schwerkraft eines verbleibenden Inhalts an Wasser in der gesamten Ausgabeleitung (2) durch die Ausgangsöffnung (2b) gestattet wird.

6. Vorrichtung nach einem der Ansprüche 1 bis 5, **dadurch gekennzeichnet, dass** die Ausgabeleitung (2) dafür geeignet ist, um quer durch die nicht horizontale Wand (3a) derart angeordnet zu sein, dass mindestens ihr Abschnitt, der die nicht horizontale Wand (3a) durchquert, im Wesentlichen horizontal ist.

7. Vorrichtung nach einem der Ansprüche 1 bis 6, **dadurch gekennzeichnet, dass** sie einen Befestigungsträger (10) umfasst, wie eine rechtwinklige Halterung (10), und dadurch, dass das Mittel vom Typ eines Ventils (5) dafür geeignet ist, um an der Innenfläche (20) der nicht horizontalen Wand (3a) durch den Befestigungsträger (10) befestigt zu sein.

8. Vorrichtung nach Anspruch 7, **dadurch gekennzeichnet, dass** das Mittel vom Typ eines Ventils (5) dafür geeignet ist, um im Inneren der isolierten Einheit (3) durch den Befestigungsträger (10) derart befestigt zu sein, dass die zentrale Achse des ersten Wegs (4) im Wesentlichen vertikal ist.

9. Vorrichtung nach einem der Ansprüche 1 bis 8, **dadurch gekennzeichnet, dass** das Mittel vom Typ eines Ventils (5) keine anderen Wege als den ersten (4), zweiten (6) und dritten (9) Weg umfasst.

10. Vorrichtung nach einem der Ansprüche 1 bis 9, **dadurch gekennzeichnet, dass** das Steuermittel (7) einen Stift (7a) umfasst, von dem ein äußerer Teil dafür geeignet ist, um an der Außenseite der isolierten Einheit (3) angeordnet zu sein, und von dem ein innerer Teil mit dem Schließelement (8) derart verbunden ist, dass ein erstes Einwirken auf den Stift (7a) von der Außenseite der isolierten Einheit (3) die Bewegung des Schließelements (8) aus seiner Schließposition in seine Öffnungsposition bewirkt, und dass ein umgekehrtes Einwirken zu dem ersten Einwirken auf den Stift (7a) von der Außenseite der isolierten Einheit (3) die Bewegung des Schließelements (8) aus seiner Öffnungsposition in seine Schließposition bewirkt.

11. Vorrichtung nach Anspruch 10, **dadurch gekennzeichnet, dass** der Stift (7a) derart mit einem Rückholelement versehen ist, dass ein Stoppen des ersten Einwirkens auf den Stift (7a) automatisch das umgekehrte Einwirken auf diesen Stift (7a) und das Rückführen des Schließelements (8) in seine Schließposition bewirkt.

## Claims

1. Water distribution device (1) comprising a water distribution pipe (2), an external portion (2a) of which is capable of being arranged outside a thermally insulated assembly (3) and of delivering water via an outlet (2b), and an internal portion (2c) of which is connected to a first way (4) of a valve-type means (5) with at least three ways (4, 6, 9) adapted to be placed inside the insulated assembly (3) and controlled by a control means (7) operable from outside the insulated assembly (3), the valve type means (5) comprising a second way (6) capable of being connected to a source of pressurized water and a closing element (8) movable by the control means (7) between an open position in which the first way (4) communicates only with the second way (6) to supply water to the outlet orifice (2b), and a closed position in which the first way (4) does not communicate with the second way (6), whereby the distribution pipe (2) is adapted to be disposed through a non-horizontal wall (3a), preferably substantially vertical, ensuring thermal insulation of the insulated assembly (3), and whereby, in the closed position, the first way communicates only and systematically with a third way (9) of the valve type means (5), so as to allow, in the closed position of the closing element (8), automatic emptying, by gravity and air intake via the third way (9), of all or a part of a residual water content in at least the non-thermally insulated part (2a) of the distribution pipe (2), via the outlet (2b).

2. Device according to claim 1, **characterized in that** the third way (9) is provided with a filter (21) adapted to allow air to pass and to filter elements of a size larger than a determined size.

3. Device according to any one of claims 1 and 2, **characterized in that** the distribution pipe (2) is adapted to be disposed through the non-horizontal wall (3a) so that the air inlet via the third way (9) is located at a level higher than the level at which the last point upstream of the non-thermally insulated outlet orifice (2b) is located.

4. Device according to any one of claims 1 to 3, **characterized in that** the distribution pipe (2) is adapted to be disposed through the non-horizontal wall (3a) so that the outlet orifice (2b) is located at a level below the level at which the last point upstream of the non-thermally insulated outlet orifice (2b) is located, and so that there is no positive slope along the distribution pipe (2) between the outlet (2b) and said last point.

5. Device according to any one of claims 1 to 4, **characterized in that** the distribution pipe (2) is adapted to be disposed through the non-horizontal wall (3a) so as to allow, in the closed position of the closing element (8), automatic draining by gravity of a residual water content in the entire distribution pipe (2) through the outlet orifice (2b).

6. Device according to any one of claims 1 to 5, **characterized in that** the distribution pipe (2) is adapted to be disposed through the non-horizontal wall (3a) so that at least its portion passing through said non-horizontal wall (3a) is substantially horizontal.

7. Device according to any one of claims 1 to 6, **characterized in that** it comprises a fixing support (10), such as an angle fixing bracket (10), and **in that** the valve type means (5) is adapted to be fixed to the internal face (20) of the non-horizontal wall (3a) by means of the fixing support (10).

8. Device according to claim 7, **characterized in that** the valve type means (5) is adapted to be fixed inside the insulated assembly (3) via the fixing support (10) so that the central axis of the first way (4) is substantially vertical.

9. Device according to any one of claims 1 to 8, **characterized in that** the valve type means (5) does not include ways other than the first (4), second (6) and third (9) ways.

10. Device according to any one of claims 1 to 9, **characterized in that** the control means (7) comprises a stem (7a) of which an external portion is adapted to be disposed outside of the insulated assembly (3) and of which an internal portion is connected to the closing element (8), so that a first action on the stem (7a) from the outside of the insulated assembly (3) causes the movement of the closing element (8) from its closed position to its open position, and that an action opposite to that of the first action on the stem (7a) from the outside of the insulated assembly (3) causes the movement of the closing element (8) from its open position to its closed position.

11. Device according to claim 10, **characterized in that** the stem (7a) is provided with a recall element so that stopping of the first action on the stem (7a) automatically causes the reverse action on said stem (7a) and the return of the closing element (8) to its closed position.
